# EUROPÄISCHE PATENTSCHRIFT

(11) **EP 2 364 763 B1**
(45) Veröffentlichungstag und Bekanntmachung des Hinweises auf die Patenterteilung: **03.07.2013**
(21) Anmeldenummer: 11153155.4
(22) Anmeldetag: 03.02.2011
(51) Int. Cl.: B01D 46/24, B60H 3/06, F02M 35/02

(54) **Filterelement und Filtereinrichtung**
Filter element and filter device
Élément de filtre et dispositif de filtrage

(30) Priorität: 25.02.2010 DE 102010009268
(43) Veröffentlichungstag der Anmeldung: 14.09.2011
(73) Patentinhaber: MAHLE International GmbH, 70376 Stuttgart (DE)
(72) Erfinder: Langner, Norbert, 71679 Asperg (DE)
(74) Vertreter: BRP Renaud & Partner

(56) Entgegenhaltungen:
- EP-A1- 1 306 117
- DE-A1- 19 930 614
- DE-A1-102005 025 192
- US-A- 5 725 621
- US-A- 5 961 678

## Beschreibung

Die vorliegende Erfindung betrifft ein Filterelement, Insbesondere für ein Luftfilter einer Frischluftanlage eines Fahrzeugs bzw. einer Brennkraftmaschine, mit den Merkmalen des Oberbegriffs des Anspruchs 1. Die Erfindung betrifft außerdem eine Filtereinrichtung, insbesondere ein Luftfilter einer Frischluftanlage eines Kraftfahrzeugs bzw. einer Brennkraftmaschine, die mit wenigstens einem solchen Filterelement ausgestattet ist.

Ein gattungsgemäßes Filterelement ist aus der DE 199 30 614 A1 bekannt und umfasst einen ringförmigen Filterkörper aus einem Filtermaterial, eine Innenzarge, an der sich der Filterkörper radial innen abstützt, und mindestens eine Endscheibe, die axial am Filterkörper und an der Innenzarge angeordnet ist, wobei die Endscheibe eine zentrale Scheibenöffnung und eine koaxial zur Scheibenöffnung angeordnete Radialdichtung aufweist.

Aus der DE 101 59 097 A1 ist eine Filtereinrichtung bekannt, die In einem Filtergehäuse ein Filterelement enthält. Das Filterelement besitzt einen ringförmigen Filterkörper aus einem Filtermaterial sowie eine Innenzarge, an der sich der Filterkörper radial innen abstützt. Desweiteren besitzt das Filterelement zwei Endscheiben, die an gegenüberliegenden Seiten axial am Filterkörper und an der Innenzarge angeordnet sind. Beide Endscheiben weisen jeweils eine zentrale Scheibenöffnung auf. In die Scheibenöffnung der einen Endscheibe ist ein Stutzen eines Primärauslasses einsteckbar. In die Schelbenöffnung der anderen Endscheibe ist ein Flansch fest eingebunden, der einen Stutzen aufweist, der mit einem Sekundärauslass fluidisch verbunden werden kann.

Aus der DE 10 2007 017 091 A1 ist ein Filterelement mit einem ringförmigen Filterkörper aus einem Filtermaterial und einer Innenzarge bekannt. Eine Endscheibe aus einem Dichtmaterial ist axial an den Filterkörper und an die Innenzarge angespritzt, derart, dass die Innenzarge radial innen nicht vom Dichtmaterial der Endschelbe überdeckt ist. Vielmehr schließen die Endscheibe und die Innenzarge radial innen bündig miteinander ab.

Aus der DE 81 29 527 U1 ist ein weiteres Filterelement bekannt, das einen ringförmigen Filterkörper, eine Innenzarge und zumindest eine axial an den Filterkörper und die Innenzarge angeschlossene Endschelbe aufweist. Die Integration von Innenzarge und Endscheibe kann dabei so erfolgen, dass die Innenzarge einen axialen Anschlag für das Filterelement definiert. Hierzu erstreckt sich die Innenzarge stirnseitig durch die Endscheibe bis zu einer stirnseitigen Oberfläche der Endscheibe, mit der sie bündig abschließt.

Problematisch bei derartigen Filterelementen bzw. Filtereinrichtungen ist die gasdichte Verbindung zwischen dem vom Filterkörper umschlossenen Innenraum und einem gehäuseseitigen Anschluss durch bzw. über die jeweilige Endscheibe. Sofern ein Stutzen durch die Scheibenöffnung der jeweiligen Endscheibe eingesteckt wird, kann sich ein die Scheibenöffnung einfassender Öffnungsrand an den jeweiligen Stutzen radial dichtend anlegen. Gleichzeitig wird dadurch auch eine Positionierung des Filterelements am Filtergehäuse erreicht. Es hat sich jedoch gezeigt, dass im Betrieb, insbesondere im Fahrzeugbetrieb, Erschütterungen bzw. Schwingungen auftreten, die zu Relativbewegungen zwischen Filterelement und Filtergehäuses führen, wodurch die Verbindung zwischen Filterelement und Filtergehäuse hohen Belastungen ausgesetzt ist. Dies kann zu einem erhöhten Verschleiß des Filterelements im Bereich der Endscheibe führen. Insbesondere kann die Dichtungswirkung zwischen Endscheibe und Stutzen nachlassen.

Die vorliegende Erfindung beschäftigt sich mit dem Problem, für ein Filterelement bzw. für eine damit ausgestattete Filtereinrichtung eine verbesserte Ausführungsform anzugeben, die sich insbesondere dadurch auszeichnet, dass die Positionierung des Filterelements im Filtergehäuse verbessert ist und/oder dass die Gefahr eines Verschleißes des Filterelements reduziert ist und/oder dass die Dichtungswirkung zwischen der jeweiligen Endscheibe des Filterelements und dem jeweiligen Stutzen des Filtergehäuses verbessert ist.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, zum einen die Endscheibe mit einer koaxial zur Scheibenöffnung angeordneten Radialdichtung auszustatten und zum anderen die Innenzarge mit mehreren nach innen abstehenden, in Umfangsrichtung vertellt angeordneten radialen Zentrierelementen zu versehen. Diese Zentrierelemente enden radial Innen an einer die Schelbenöffnung umschließenden Innenwand der Endschelbe. Folglich sind die radialen Zentrierelemente radial innen bündig in die Innenwand der Endscheibe eingebettet. Die hier vorgeschlagene Bauweise führt zu einer funktionellen Trennung der mit Hilfe der Radialdichtung realisierbaren Dichtungswirkung von der mit Hilfe der radialen Zentrierelemente realisierbaren Zentrierwirkung. Hierdurch werden diese Funktionen voneinander entkoppelt, wodurch die Effektivität der einzelnen Funktionalität verbessert werden kann. Die Zentrierung des Filterelements im Bereich seiner Endscheibe am gehäuseseitigen Stutzen erfolgt über die radialen Zentrierelemente, also über die Innenzarge, die üblicherweise aus einem Zargenmaterial besteht, dessen Steifigkeit größer ist als die Steifigkeit des Scheibenmaterials oder des Filtermaterials, Hierdurch ergibt sich eine stabile, zentrierte Abstützung der Innenzarge über deren radiale Zentrierelemente und somit des Filterelements im Bereich der zugehörigen Endscheibe am jeweiligen, In die Scheibenöffnung besagter Endscheibe eingesteckten, gehäuseseitigen Stutzen. Im Unterschied dazu besteht die Radialdichtung zweckmäßig aus einem Dichtungsmaterial bzw. aus dem Scheibenmaterial, falls die Radialdichtung integral an der Endscheibe ausgeformt ist. Das Dichtungsmaterial bzw. das Scheibenmaterial ist vergleichsweise elastisch bzw. biegeweich, jedenfalls weicher als das Zargenmaterial und kann somit die gewünschte Dichtungsfunktion realisieren. Insbesondere kann die Radialdichtung beim Einstecken des jeweiligen Stutzens elastisch gedehnt werden, so dass die Radialdichtung schließlich unter radialer Vorspannung radial dichtend am jeweiligen Stutzen zur Anlage kommt.

Die radialen Zentrierelemente und/oder die axialen Zentrierelemente sind erfindungsgemäß weitgehend in die Endscheibe eingebettet. Zweckmäßig sind sie im Wesentlichen vollständig in die Endscheibe eingebettet.

Die vorgeschlagene Bauweise führt zu einer signifikanten Reduzierung der Bauteilbelastung, was die Gefahr einer Beschädigung reduziert. Gleichzeitig wird die Dichtungswirkung verbessert.

Entsprechend einer bevorzugten Ausführungsform weist die Innenzarge eine koaxial zur Scheibenöffnung angeordnete Zargenöffnung auf, wobei die radialen Zentrierelemente im Bereich dieser Zargenöffnung ausgehen können. Besonders zweckmäßig ist dabei eine Ausführungsform, bei der die Innenzarge einen Innenrand besitzt, der die zuvor genannte Zargenöffnung umschließt und von dem die radialen Zentrierelemente ausgehen. Hierdurch wird eine sternförmige Anordnung der radialen Zentrierelemente vereinfacht.

Besonders vorteilhaft ist nun eine Ausführungsform, bei welcher die Innenzarge einen scheibenförmigen, axialen Endabschnitt aufweist, der zentral die Zargenöffnung enthält. Durch den scheibenförmigen axialen Endabschnitt erhält die Innenzarge im Bereich der Endscheibe eine signifikant vergrößerte Stabilität, wodurch es insbesondere möglich ist, eine Tragfunktion von der Endscheibe auf die Innenzarge zu verlagern. Hierdurch wird die Herstellung der Endscheibe aus einem Dichtungsmaterial, insbesondere aus einem Schaummaterial, vereinfacht, was die Dichtungsfunktion der Endscheibe verbessert. Die Dichtungsfunktion der Endscheibe betrifft zum einen die axiale Abdichtung des Filtermaterials des Filterkörper. Sie kann zum anderen optional auch die Realisierung der Radialdichtung betreffen.

Bei einer anderen vorteilhaften Ausführungsform kann an der Endscheibe eine Stutzenaufnahme zum axialen Einführen eines Stutzens ausgebildet sein. Diese Stutzenaufnahme kann die Scheibenöffnung bilden und die Innenwand sowie die Radialdichtung aufweisen. Zweckmäßig kann besagte Stutzenaufnahme Integral an der Endscheibe ausgeformt sein.

Um die Positionierung des Filterelemente im Filtergehäuse weiter verbessern bzw. stabilisieren zu können, kann die innenzarge optional mehrere in Umfangsrichtung verteilt angeordnete, nach außen abstehende axiale Zentrierelemente aufweisen, die axial außen an einer Außenseite der Endscheibe enden.

Besonders vorteilhaft ist eine Ausführungsform, bei der das jeweilige Zentrierelement nur noch mit seinem mit Bezug auf die übrige Innenzarge distalen stirnseitigen Ende sichtbar ist bzw. nicht vom Scheibenmaterial bedeckt ist und dort insbesondere bündig zur Endscheibe verläuft bzw. endet.

Die radialen Zentrierelemente besitzen bezogen auf eine Längsmittelachse des Filterelements eine radiale Dimension. Besonders vorteilhaft Ist eine Ausführungsform, bei der sich die radialen Zentrierelemente bezüglich der Längsmittelachse des Filterelements radial nach innen erstrecken. Entsprechendes gilt auch für die axialen Zentrierelemente, die eine parallel zur Längsachse des Filterelements verlaufende axiale Dimension besitzen. Bevorzugt Ist Jedoch hier eine Ausführungsform, bei welcher sich die axialen Zentrierelemente axial erstrecken, so dass sie parallel zur Längsachse des Filterelements verlaufen.

Mit Hilfe eines Deckels zum Verschließen des Aufnahmeraums, der einen ebenfalls mit einer Endscheibe des Filterelements zusammenwirkenden Stutzen aufweist, kann eine Montagehilfe und Zentrierhilfe für das Filterelement bereitgestellt werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: einen Längsschnitt durch eine Filtereinrichtung im Bereich eines Filterelements,
- Fig. 2: ein vergrößertes Detail aus Fig. 1 im Bereich einer Endscheibe des Filterelements,
- Fig. 3: eine axiale Ansicht einer Innenzarge des Filterelements.

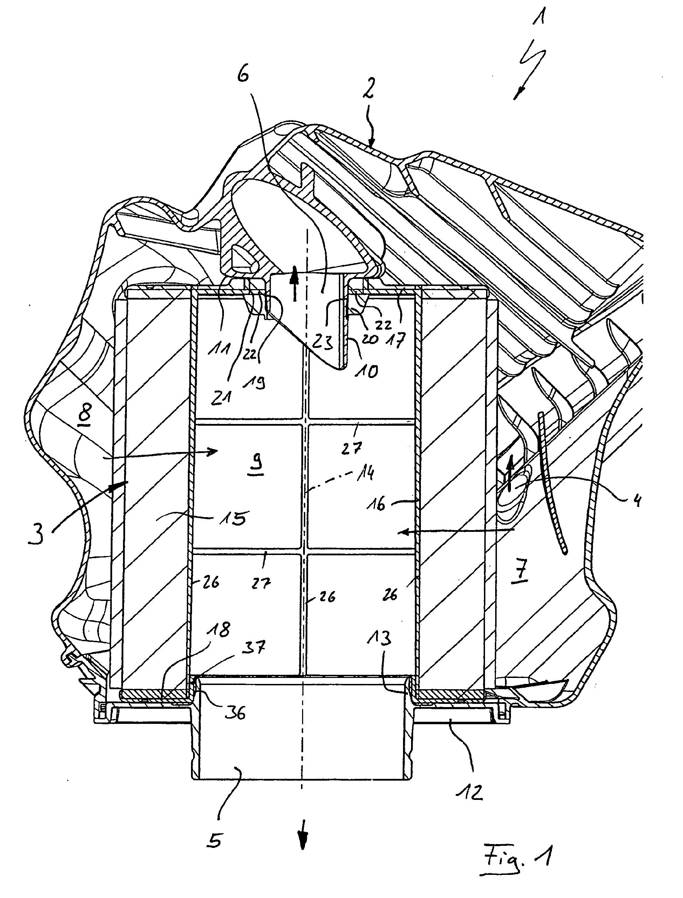

Entsprechend Fig. 1 umfasst eine Filtereinrichtung 1 ein Filtergehäuse 2 sowie ein darin angeordnetes Filterelement 3. Die Filtereinrichtung 1 ist bevorzugt als Luftfilter einer Frischluftanlage ausgestaltet, mit deren Hilfe einem Kraftfahrzeug bzw. einem Fahrzeuginnenraum oder vorzugsweise einer Brennkraftmaschine Frischluft zuführbar ist. Beim Filterelement 3 handelt es sich dann um ein Luftfilterelement.

Das Filtergehäuse 2 weist einen Einlass 4, einen Primärauslass 5 und einen Sekundärauslass 6 auf. Ferner umschließt das Filtergehäuse 2 einen Aufnahmeraum 7, in dem das Filterelement 3 angeordnet ist. Das Filterelement 3 trennt im Filtergehäuse 2 bzw. im Aufnahmeraum 7 einen mit dem Einlass 4 kommunizierenden Rohraum 8 von einem mit den beiden Auslässen 5, 6 kommunizierenden Reinraum 9. Im Beispiel ist das Filterelement 3 von außen nach innen durchströmt, so dass das Filterelement 3 den Reinraum 9 umschließt und seinerseits vom Rohraum 8 umhüllt ist.

Der Sekundärauslass 6 weist einen Stutzen 10 auf, der an einem Boden 11 des Aufnahmeraums 7 bzw. des Filtergehäuses 2 angeordnet ist. Der Aufnahmeraum 7 ist mit einem Deckel 12 des Filtergehäuses 2 verschließbar. Der Primärauslass 5 ist an diesem Deckel 12 ausgebildet. Dabei umfasst auch der Primärauslass 5 einen Stutzen 13, der hier integral am Deckel 12 ausgeformt ist. Die beiden Auslässe 5, 6 liegen sich axial gegenüber. Insbesondere sind sie zueinander koaxial angeordnet. Die Bezugsachse ist hierbei durch die Längsmittelachse 14 des Filterelements 3 gebildet. Zweckmäßig ist das Filterelement 3 mit dem Deckel 12 lösbar verbunden, bspw. verclipst oder verrastet. Jedenfalls ist diese Verbindung vorzugsweise so konfiguriert, dass das Filterelement 3 beim Entfernen des Deckels 12 vom Gehäuse 2 aus dem Aufnahmeraum 7 herausbewegt wird. Mit anderen Worten, das Filterelement 3 kann zusammen mit dem Deckel 12 aus dem Filtergehäuse 2 herausgezogen werden. Dies erleichtert die Demontage. Analog dazu kann auch die Montage vereinfacht werden, wenn das Filterelement 3 verbunden mit dem Deckel 12 in das Filtergehäuse 2 eingesetzt werden kann. Durch die Befestigung des Filterelements 3 am Deckel 12 erfolgt eine Positionierung im Filtergehäuse 2, wodurch ein axiales Verkanten oder Verkippen des Filterelements 3 bei der Montage verhindert wird.

Das Filterelement 3 besitzt einen ringförmigen Filterkörper 15, der aus einem Filtermaterial besteht und sich koaxial zur Längsmittelachse 14 erstreckt. Das Filtermaterial kann insbesondere gefaltet bzw. plissiert sein.

Das Filterelement 3 weist außerdem eine Innenzarge 16 auf, an der sich der Filterkörper 15 radial innen abstützt. Die Radialrichtung bezieht sich dabei auf die Längsmittelachse 14. Die Innenzarge 16 besteht aus einem Zargenmaterial, das eine deutlich höhere Stabilität als das Filtermaterial besitzt.

Ferner weist das Filterelement 3 zumindest eine Endscheibe 17, 18 auf. Im Beispiel sind zwei Endscheiben 17, 18 vorgesehen, die an den beiden axial voneinander abgewandten Stirnseiten des Filterelements 3 angeordnet sind. Dementsprechend ist die eine Endscheibe 17 dem Sekundärauslass 6 zugeordnet, während die andere Endscheibe 18 dem Primärauslass 5 zugeordnet ist.

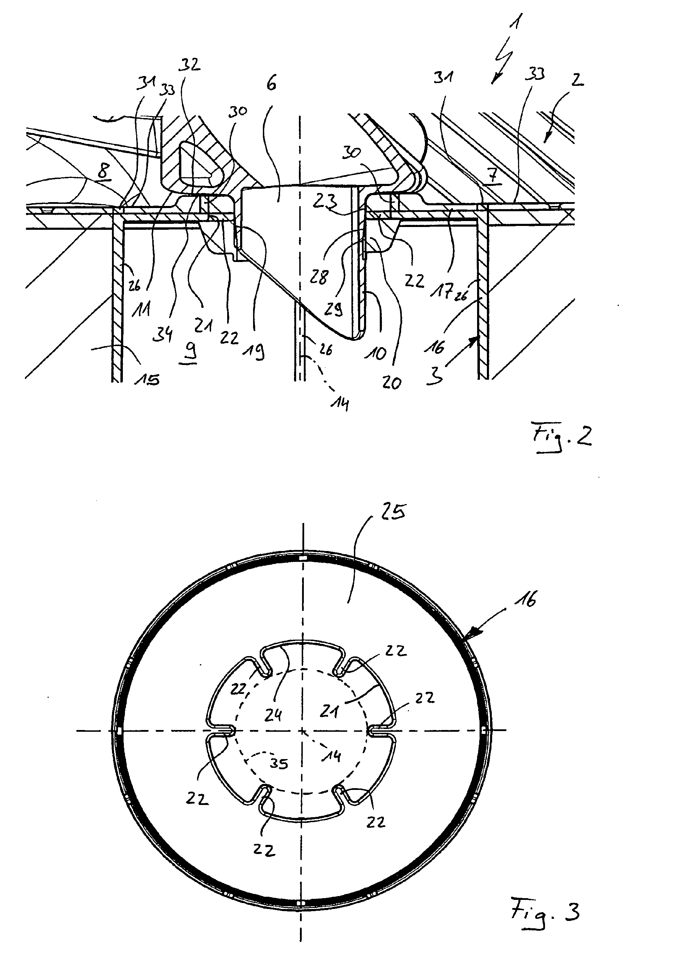

Die dem Sekundärauslass 6 zugeordnete Endscheibe 17 wird im Folgenden anhand der Fig. 2 und 3 näher erläutert. Diese Endscheibe 17 weist eine zentrale Scheibenöffnung 19 auf, durch welche der Stutzen 10 des Sekundärauslasses 6 einführbar ist. Koaxial zu dieser Scheibenöffnung 19 weist die jeweilige Endscheibe 17 eine Radialdichtung 20 auf, die im montierten Zustand radial außen am Stutzen 10 radial dichtend zur Anlage kommt.

Die Innenzarge 16 weist eine Zargenöffnung 21 auf, die koaxial zur Scheibenöffnung 19 angeordnet ist. Ferner weist die Innenzarge 16 mehrere radiale Zentrierelemente 22 auf, die nach innen abstehen und in Umfangsrichtung verteilt angeordnet sind. Auch die Umfangsrichtung bezieht sich hier auf die Längsmittelebene 14. Radial innen enden diese radialen Zentrierelemente 22 an einer Innenwand 23 der Endscheibe 17, wobei diese Innenwand 23 die Scheibenöffnung 19 umschließt.

Die Zargenöffnung 21 ist von einem Innenrand 24 der Innenzarge 16 umschlossen. Die radialen Zentrierelemente 22 gehen von diesem Innenrand 24 aus. Im gezeigten Beispiel erstrecken sich die radialen Zentrierelemente 22 exakt radial zur Längsmittelachse 14, also sternförmig. Sie könnten jedoch bei einer anderen Ausführungsform auch gegenüber dieser exakten radialen Ausrichtung geneigt bzw. angestellt sein. Ebenso könnten sie in ihrer Ausrichtung eine Axialkomponente aufweisen.

Zweckmäßig besitzt die Innenzarge 16 einen scheibenförmigen axialen Endabschnitt 25, der im Folgenden auch als Scheibenabschnitt 25 bezeichnet werden kann. Der Scheibenabschnitt 25 enthält zentral die Zargenöffnung 21. Somit bildet seine Innenseite den Innenrand 21. Radial außen schließt der Scheibenabschnitt 25 am Filterkörper 15 ab. Dementsprechend endet der Scheibenabschnitt 25 radial außen am Filterkörper 15. Im Bereich der Außenseite des Scheibenabschnitts 25 gehen Axialstege 26 der Innenzarge 16 aus, die gemäß Fig. 1 über Ringe oder Ringsegmente 27 miteinander verbunden sind.

An der dem Sekundärauslass 6 zugeordneten Endscheibe 17 ist außerdem eine Stutzenaufnahme 28 ausgebildet, die zum axialen Einführen des Stutzens 10 dient. Zweckmäßig ist diese Stutzenaufnahme 28 dabei integral an der Endscheibe 17 ausgeformt. Diese Stutzenaufnahme 28 bildet dabei die Scheibenöffnung 19 und weist somit auch die Innenwand 23 sowie die Radialdichtung 20 auf. Diese Radialdichtung 20 besitzt zweckmäßig zumindest eine radial wirkende Dichtkontur 29, bspw. in Form einer radial nach innen vorstehenden, ringförmig geschlossen umlaufenden Kante. An dieser Dichtkontur 29 finden letztlich die radiale Kontaktierung mit dem eingesteckten Stutzen 10 und die Dichtungswirkung statt. Besagte Dichtkontur 29 ist bezüglich den radialen Zentrierelementen 22 axial beabstandet angeordnet. Insbesondere ist die Dichtkontur 29 axial nach innen, also in das vom Filterkörper 15 umschlossene Innere des Filterelements 3 hinein versetzt zu den radialen Zentrierelementen 22 angeordnet. Hierdurch wird zusätzlich eine räumliche Entkopplung zwischen der mit der Radialdichtung 20 erzielten Dichtungsfunktion und der mit Hilfe der radialen Zentrierelementen 22 erzeugten Zentrierfunktion erreicht.

Gemäß Fig. 2 kann die Innenzarge 16 außerdem mehrere axiale Zentrierelemente 30, 31 aufweisen. Auch diese axialen Zentrierelemente 30, 31 sind in Umfangsrichtung verteilt angeordnet, sie stehen jedoch nach außen ab und enden axial außen an einer Außenseite 32 bzw. 33 der Endscheibe 17. Auch hier sind diese axialen Zentrierelemente 30, 31 im Bereich der dem Sekundärauslass 6 zugeordneten Endscheibe 17 an der Innenzarge 16 ausgebildet, insbesondere integral ausgeformt. Im Beispiel sind innere axiale Zentrierelemente 30 und äußere axiale Zentrierelemente 31 vorgesehen, so dass die inneren axialen Zentrierelemente 30 in radialer Richtung weiter innen angeordnet sind als die äußeren axialen Zentrierelemente 31. Insbesondere sind die inneren axialen Zentrierelemente 30 an der Innenzarge 16 so positioniert, dass sie im Bereich des Innenrands 21 nach außen abstehen, von dem auch die radialen Zentrierelemente 22 nach innen abstehen. Ferner sind die äußeren axialen Zentrierelemente 31 im Beispiel an der Innenzarge 16 so positioniert, dass sie im Bereich des Filterkörpers 15, also etwa im Bereich der Axialstege 26, nach außen abstehen.

Auch für die axialen Zentrierelemente 30, 31 wird eine axiale Ausrichtung bevorzugt, so dass sie parallel zur Längsmittelachse 14 von der Innenzarge 16 abstehen. Grundsätzlich sind jedoch auch gegenüber der Axialrichtung geneigte Orientierungen für die axialen Zentrierelemente 30, 31 möglich.

Bei den hier gezeigten Ausführungsformen sind die Zentrierelemente 22, 30, 31 weitgehend in die jeweilige Endscheibe 17 eingebettet. Mit anderen Worten, sie sind vom Scheibenmaterial vollständig oder beinahe vollständig umschlossen. Bevorzugt sind die Zentrierelemente 22, 30, 31 vom Scheibenmaterial soweit umschlossen, dass nur noch ihre jeweilige radiale bzw. axiale Stirnseite, die von der übrigen Innenzarge 16 weggerichtet ist, nicht vom Scheibenmaterial bedeckt sind. Somit enden die Zentrierelemente 22, 30, 31 distal zur Innenzarge 16 jeweils bündig zur Endscheibe 17.

Die inneren axialen Zentrierelemente 30 können einen Axialanschlag definieren, der mit einer am Boden 11 am Übergang zum Stutzen 10 ausgebildeten Ringstufe 34 zusammenwirken können, um das Filterelement 3 beim Aufstecken auf den Stutzen 10 zu positionieren. Gleichzeitig kann dadurch ein ungewünschtes Quetschen des Scheibenmaterials am Boden 11 vermieden werden. Auch die außenliegenden axialen Zentrierelemente 31 können als Anschlag gegenüber einer geeigneten Innenkontur des Filtergehäuses 2 dienen.

Entsprechend Fig. 3 können die radialen Zentrierelemente 22 radial innen an einem gemeinsamen Zentrierkreis 35 enden. Der Zentrierkreis 35 ist dabei koaxial zur Längsmittelachse 14 und somit koaxial zur Zargenöffnung 21 angeordnet. In Verbindung mit einem Stutzen 10, der eine kreiszylindrische Außenkontur besitzt, kann mit Hilfe der radialen Zentrierelemente 22 so eine optimale Zentrierung des Filterelements 3 relativ zum Stutzen 10 realisiert werden.

Die Radialdichtung 22 definiert im entspannten Zustand, also bei nicht darin eingestecktem Stutzen 10, insbesondere mit ihrer Dichtkontur 29, einen Innenkreis, der hier nicht näher bezeichnet ist und der kleiner ist als der Zentrierkreis 35. Hierdurch wird erreicht, dass die Radialdichtung 20 beim Einstecken des Stutzens 10 aufgeweitet wird. Dies erfolgt elastisch und erzeugt eine radial nach innen wirkende Vorspannung, mit welcher die Radialdichtung 20, insbesondere im Bereich ihrer Dichtkontur 29 radial an der Außenkontur des Stutzens 10 zur Anlage kommt.

Die Endscheibe 17 ist bei einer besonders vorteilhaften Ausführungsform an den Filterkörper 15 und an die Innenzarge 16 angespritzt oder angeschäumt. Hierdurch können zusätzliche Befestigungsmaßnahmen entfallen. Zum Anschäumen kann bspw. ein PU-Schaum als Scheibenmaterial verwendet werden. Zum Anschäumen und Anspritzen eignen sich insbesondere Dichtmaterialien, wodurch die Dichtungswirkung der Endscheibe 17 im Bereich des Filterkörpers 15 und im Bereich der Radialdichtung 20 verbessert ist.

Entsprechend Fig. 1 besitzt auch die den Primärauslass 5 zugeordnete Endscheibe 18 eine zentrale Scheibenöffnung 36, die jedoch deutlich größer dimensioniert ist als die Scheibenöffnung 19 der gegenüberliegenden Endscheibe 17. Der primärseitige Stutzen 13 dringt in diese Scheibenöffnung 36 ein. Hierzu kann die Endscheibe 18 ebenfalls mit einer Stutzenaufnahme 37 ausgestattet sein, an der außerdem eine Dichtkontur zum Erzeugen einer Radialdichtung ausgebildet sein kann. Auch diese Endscheibe 18 ist zweckmäßig an den Filterkörper 15 und an die Innenzarge 16 angespritzt oder angeschäumt. Durch die Positionierung des Filterelements 3 mit seinen Endscheiben 17, 18 an den beiden Stutzen 10, 13 ist das Filterelement 3 am Boden 11 und am Deckel 12 radial im Filtergehäuse 2 zentriert.

## Patentansprüche

1. Filterelement, insbesondere für einen Luftfilter einer Frischluftanlage eines Fahrzeugs und/oder einer Brennkraftmaschine,
- mit einem ringförmigen Filterkörper (15) aus einem Filtermaterial,
- mit einer Innenzarge (16), an der sich der Filterkörper (15) radial innen abstützt,
- mit mindestens einer Endscheibe (17), die axial am Filterkörper (15) und an der Innenzarge (16) angeordnet ist,
- wobei die Endscheibe (17) eine zentrale Scheibenöffnung (19) aufweist,
- wobei die Endscheibe (17) eine koaxial zur Scheibenöffnung (19) angeordnete Radialdichtung (20) aufweist,
**dadurch gekennzeichnet,**
- **dass** die Innenzarge (16) mehrere in Umfangsrichtung verteilt angeordnete, nach innen abstehende radiale Zentrierelemente (22) aufweist, die radial innen an einer die Scheibenöffnung (19) umschließenden Innenwand (23) der Endscheibe (17) enden,
- **dass** die Zentrierelemente (22, 30, 31) weitgehend in die Endscheibe (17) eingebettet sind.

2. Filterelement nach Anspruch 1,
**dadurch gekennzeichnet,**
- **dass** die Innenzarge (16) eine koaxial zur Scheibenöffnung (19) angeordnete Zargenöffnung (21) aufweist,
- wobei insbesondere vorgesehen sein kann, dass die radialen Zentrierelemente (22) von einem die Zargenöffnung (21) umschließenden Innenrand (24) der Innenzarge (16) ausgehen.

3. Filterelement nach Anspruch 2,
**dadurch gekennzeichnet,**
- **dass** die Innenzarge (16) einen scheibenförmigen axialen Endabschnitt (25) aufweist, der zentral die Zargenöffnung (21) enthält,
- wobei insbesondere vorgesehen sein kann, dass der scheibenförmige Endabschnitt (25) radial außen am Filterkörper (15) endet.

4. Filterelement nach einem der Ansprüche 1 bis 3,
**dadurch gekennzeichnet,**
**dass** an der Endscheibe (17) eine Stutzenaufnahme (28) zum axialen Einführen eines Stutzens (10) ausgebildet ist, wobei die Stutzenaufnahme (28) die Scheibenöffnung (19) bildet und die Innenwand (23) sowie die Radialdichtung (20) aufweist.

5. Filterelement nach einem der Ansprüche 1 bis 4,
**dadurch gekennzeichnet,**
**dass** die Innenzarge (16) mehrere in Umfangsrichtung verteilt angeordnete, nach außen abstehende axiale Zentrierelemente (30, 31) aufweist, die axial außen an einer Außenseite (32, 33) der Endscheibe (17) enden.

6. Filterelement nach Anspruch 5,
**dadurch gekennzeichnet,**
- **dass** die Innenzarge (16) innere axiale Zentrierelemente (30) aufweist, die im Bereich eines Innenrands (24) der Innenzarge (16) nach außen abstehen, von dem auch die radialen Zentrierelemente (22) nach innen abstehen, und/oder
- **dass** die Innenzarge (16) äußere axiale Zentrierelemente (31) aufweist, die im Bereich des Filterkörpers (15) nach außen abstehen.

7. Filterelement nach einem der Ansprüche 1 bis 6,
**dadurch gekennzeichnet,**
**dass** das jeweilige Zentrierelement (22, 30, 31) distal zur Innenzarge (16) bündig zur Endscheibe (17) endet.

8. Filterelement nach einem der Ansprüche 1 bis 7,
**dadurch gekennzeichnet,**
- **dass** die radialen Zentrierelemente (22) radial von der Innenzarge (16) nach innen abstehen, und/oder
- **dass** die axialen Zentrierelemente (30, 31) axial von der Innenzarge (16) nach außen abstehen, und/oder
- **dass** die Endscheibe (17) an den Filterkörper (15) und an die Innenzarge (16) angespritzt oder angeschäumt ist.

9. Filterelement nach einem der Ansprüche 1 bis 8,
**dadurch gekennzeichnet,**
**dass** die Radialdichtung (20) zumindest eine radial wirkende Dichtkontur (29) aufweist, die zu den radialen Zentrierelementen (22) axial versetzt angeordnet ist, insbesondere axial nach innen versetzt angeordnet ist.

10. Filterelement nach einem der Ansprüche 1 bis 9,
**dadurch gekennzeichnet,**
**dass** die radialen Zentrierelemente (22) radial innen an einem gemeinsamen Zentrierkreis (35) enden, der koaxial zur Zargenöffnung (21) angeordnet ist, wobei insbesondere vorgesehen sein kann, dass die Radialdichtung (20) im entspannten Zustand einen Innenkreis definiert, der kleiner ist als der Zentrierkreis (35).

11. Filtereinrichtung, insbesondere Luftfilter einer Frischluftanlage eines Kraftfahrzeugs und/oder einer Brennkraftmaschine,
- mit einem Filtergehäuse (2), das einen Einlass (4), einen Primärauslass (5) und einen Sekundärauslass (6) aufweist,
- mit einem Filterelement (3) nach einem der Ansprüche 1 bis 10, das in einem Aufnahmeraum (7) des Filtergehäuses (2) einen das Filterelement (3) umhüllenden und mit dem Einlass (4) kommunizierenden Rohraum (8) von einem mit den Auslässen (5, 6) kommunizierenden, vom Filterelement (3) umschlossenen Reinraum (9) trennt.

12. Filtereinrichtung nach Anspruch 11,
**dadurch gekennzeichnet,**
- **dass** der Sekundärauslass (6) einen an einem Boden (11) des Aufnahmeraums (7) angeordneten Stutzen (10) aufweist, der in die Scheibenöffnung (19) der einen Endscheibe (17) eingesteckt ist, und /oder
- **dass** der Primärauslass (5) einen an einem den Aufnahmeraum (7) verschließenden Deckel (12) des Filtergehäuses (2) ausgebildeten Stutzen (13) aufweist, der in eine Scheibenöffnung (36) der anderen Endscheibe (18) eingesteckt ist, und/oder
- **dass** das Filterelement (3) mit dem Deckel (12) so lösbar verbunden, insbesondere verclipst ist, dass das Filterelement (3) beim Entfernen des Deckels (12) aus dem Aufnahmeraum (7) herausbewegt wird.

## Claims

1. A filter element, in particular for an air filter of a fresh air system of a vehicle and/or an internal combustion engine,
- with an annular filter body (15) made of a filter material,
- with an internal support frame (16) on which said filter body (15) is supported radially on the inside,
- with at least one end disk (17) which is arranged at the filter body (15) and the internal support frame (16),
- wherein the end disk (17) has a central disk opening (19),
- wherein the end disk (17) has a radial seal (20) which is arranged coaxially to the disk opening (19),
**Characterized in**
- **that** the internal support frame (16) has a plurality of radial centering elements (22) which are arranged distributed in the circumferential direction and project inwardly and which end radially on the inside at an inner wall (23) of the end disk (17), which inner wall encloses the disk opening (19),
- **that** the centering elements (22, 30, 31) are embedded to a large extent into the end disk (17).

2. The filter element according to claim 1,
**characterized in**
- **that** the internal support frame (16) has a support frame opening (21) arranged coaxially to the disk opening (19),
- wherein it can in particular be provided that the radial centering elements (22) extend from an inner edge (24) of the internal support frame (16), which inner edge encloses the support frame opening (21).

3. The filter element according to claim 2,
**characterized in**
- **that** the internal support frame (16) has a disk-shaped axial end section (25) which contains the support frame opening (21) in the center,
- wherein it can in particular be provided that the disk-shaped end section (25) ends radially on the outside at the filter body (15).

4. The filter element according to any one of the claims 1 to 3,
**characterized in**
**that** a nozzle receptacle (28) is formed on the end disk (17) for axially inserting a nozzle (10), wherein the nozzle receptacle (28) forms the disk opening (19) and comprises the inner wall (23) as well as the radial seal (20).

5. The filter element according to any one of the claims 1 to 4,
**characterized in**
**that** the internal support frame (16) has a plurality of axial centering elements (30, 31) which project outwardly and which end axially on the outside at an outer side (32, 33) of the end disk (17).

6. The filter element according to claim 5,
**characterized in**
- **that** the internal support frame (16) has internal axial centering elements (30) which project outwardly in the region of an inner edge (24) of the internal support frame (16) from which also the radial centering elements (22) project inwardly, and/or
- **that** the internal support frame (16) has external axial centering elements (31) which project outwardly in the region of the filter body (15).

7. The filter element according to any one of the claims 1 to 6,
**characterized in**
**that** the respective centering element (22, 30, 31) ends distally to the internal support frame (16) and flush with the end disk (17).

8. The filter element according to any one of the claims 1 to 7,
**characterized in**
- **that** the radial centering elements (22) extend radially inwardly from the internal support frame (16), and/or
- **that** the axial centering elements (30, 31) extend axially outwards from the internal support frame (16), and/or
- **that** the end disk (17) is injection molded or foamed onto the filter body (15) and the internal support frame (16).

9. The filter element according to any one of the claims 1 to 8,
**characterized in**
**that** the radial seal (20) has at least one radially acting sealing contour (29) which is arranged axially shifted with respect to the radial centering elements (22), in particular arranged axially shifted inwardly.

10. The filter element according to any one of the claims 1 to 9,
**characterized in**
**that** the radial centering elements (22) end radially on the inside at a common centering circle (35) which is arranged coaxially to the support frame opening (21), wherein it can in particular be provided that in the relaxed state, the radial seal (20) defines an inner circle which is smaller than the centering circle (35).

11. A filter device, in particular air filter of a fresh air system of a motor vehicle and/or an internal combustion engine,
- with a filter housing (2) which has an inlet (4), a primary outlet (5) and a secondary outlet (6),
- with a filter element (3) according to any one of the claims 1 to 10, which filter element separates in a receiving chamber (7) of the filter housing (2), a crude chamber (8) which encloses the filter element (3) and communicates with the inlet (4) from a pure chamber (9) which communicates with the outlets (5, 6) and which is enclosed by the filter element (3).

12. The filter device according to claim 11,
**characterized in**
- **that** the secondary outlet (6) has a nozzle (10) which is arranged at a bottom (11) of the receiving chamber (7) and which is inserted into the disk opening (19) of the one end disk (17), and/or
- **that** the primary outlet (5) has a nozzle (13) which is formed on a cover (12) of the filter housing (2), wherein the cover closes the receiving chamber (7), and which nozzle is inserted in a disk opening (36) of the other end disk (18), and/or
- **that** the filter element (3) is detachably connected, in particular clipped, to the cover (12) in such a manner that the filter element (3) is moved out of the receiving chamber (7) when removing the cover (12).

## Revendications

1. Elément de filtre, notamment pour un filtre à air d'une installation d'air frais d'un véhicule et/ou d'un moteur à combustion interne,
- comportant un corps de filtre annulaire (15) constitué d'un matériau filtrant,
- comportant un cadre intérieur (16), sur lequel s'appuie le corps de filtre (15) radialement à l'intérieur,
- comportant au moins une rondelle d'extrémité (7), qui est disposée axialement sur le corps de filtre (15) et sur le cadre intérieur (16),
- dans lequel la rondelle d'extrémité (17) présente une ouverture de rondelle centrale (19),
- dans lequel la rondelle d'extrémité (17) présente un joint d'étanchéité radial (20) disposé coaxialement à l'ouverture de rondelle (19),
**caractérisé en ce que**
- le cadre intérieur (16) présente plusieurs éléments de centrage (22) radiaux répartis dans la direction circonférentielle, en saillie vers l'intérieur, qui aboutissent radialement à l'intérieur sur une paroi intérieure (23) de la rondelle d'extrémité (17) entourant l'ouverture de rondelle (19),
- **en ce que** les éléments de centrage (22, 30, 31) sont essentiellement incorporés dans la rondelle d'extrémité (17).

2. Elément de filtre selon la revendication 1, **caractérisé en ce que**
- le cadre intérieur (16) présente une ouverture de cadre (21) disposée coaxialement à l'ouverture de rondelle (19),
- dans lequel il peut notamment être prévu que les éléments de centrage radiaux (22) partent d'un bord intérieur (24) du cadre intérieur (16) entourant l'ouverture de cadre (21).

3. Elément de filtre selon la revendication 2, **caractérisé en ce que**
- le cadre intérieur (16) présente une portion d'extrémité axiale (25) en forme de rondelle, qui contient au centre l'ouverture de cadre (21),
- dans lequel il peut notamment être prévu que la portion d'extrémité (25) en forme de rondelle aboutisse radialement à l'extérieur sur le corps de filtre (15).

4. Elément de filtre selon une des revendications 1 à 3, **caractérisé en ce que** sur la rondelle d'extrémité (17), un réceptacle d'embout (28) à des fins d'insertion axiale d'un embout (10) est réalisé, dans lequel le réceptacle d'embout (28) forme l'ouverture de rondelle (19) et forme la paroi intérieure (23) ainsi que le joint d'étanchéité radial (20).

5. Elément de filtre selon une des revendications 1 à 4, **caractérisé en ce que** le cadre intérieur (16) présente plusieurs éléments de centrage axiaux (30, 31) répartis dans la direction circonférentielle, en saillie axile vers l'extérieur, qui aboutissent à l'extérieur sur un côté extérieur (32, 33) de la rondelle d'extrémité (17).

6. Elément de filtre selon la revendication 5, **caractérisé en ce que**
- le cadre intérieur (16) présente des éléments de centrage axiaux intérieurs (30), qui dépassent vers l'extérieur au niveau d'un bord intérieur (24) du cadre intérieur (16), desquels les éléments de centrage radiaux (22) dépassent aussi vers l'intérieur, et/ou
- le cadre intérieur (16) présente des éléments de centrage axiaux extérieurs (31), sui dépassent vers l'extérieur au niveau du corps de filtre (15).

7. Elément de filtre selon une des revendications 1 à 6, **caractérisé en ce que** l'élément de centrage respectif (22, 30, 31) aboutit distalement au cadre intérieur (16) au ras de la rondelle d'extrémité (17).

8. Elément de filtre selon une des revendications 1 à 7, **caractérisé en ce que**
- les éléments de centrage radiaux (22) dépassent radialement du cadre intérieur (16) vers l'intérieur, et/ou
- les éléments de centrage axiaux (30, 31) dépassent axialement du cadre intérieur (16) vers l'extérieur, et/ou
- la rondelle d'extrémité (17) est moulée par injection ou par expansion alvéolaire sur le corps de filtre (15) et sur le cadre intérieur (16).

9. Elément de filtre selon une des revendications 1 à 8, **caractérisé en ce que** le joint d'étanchéité radial (20) présente au moins un contour d'étanchéité (29) à action radiale, qui est disposé en décalage axial par rapport aux éléments de centrage radiaux (22), notamment est disposé en décalage axial vers l'intérieur.

10. Elément de filtre selon une des revendications 1 à 9, **caractérisé en ce que** les éléments de centrage radiaux (22) aboutissent radialement à l'intérieur sur un cercle de centrage commun (35), qui est disposé coaxialement à l'ouverture de cadre (21), dans lequel il peut notamment être prévu que le joint d'étanchéité radial (20) en l'état détendu définisse un cercle intérieur, qui est plus petit que le cercle de centrage (35).

11. Dispositif de filtrage, notamment filtre à air d'une installation d'air frais d'un véhicule automobile et/ou d'un moteur à combustion interne,
- comportant un logement de filtre (2), qui présente une admission (4), un échappement primaire (5) et un échappement secondaire (6),
- comportant un élément de filtre (3) selon une des revendications 1 à 10, qui dans un espace de réceptacle (7) du logement de filtre (2) sépare un espace brut (8) communiquant avec l'admission (4) et enveloppant l'élément de filtre (3) d'un espace purifié (9) communiquant avec les échappements (5,6), entouré par l'élément de filtre (3).

12. Dispositif de filtrage selon la revendication 11, **caractérisé en ce que**
- l'échappement secondaire (6) présente un embout (10) disposé sur une base (11) de l'espace de réceptacle (7), qui est enfiché dans l'ouverture de rondelle (19) d'une des rondelles d'extrémité (17), et/ou
- l'échappement primaire (5) présente un embout (13) réalisé sur un couvercle (12) du logement de filtre (2) obturant l'espace de réceptacle (7), qui est enfiché dans une ouverture de rondelle (36) de l'autre rondelle d'extrémité (18), et/ou
- l'élément de filtre (3) est relié de manière amovible au couvercle (12), notamment clipsé, de telle sorte que l'élément de filtre (3) soit extrait de l'espace de réceptacle (7) lors du retrait du couvercle (12).
